Europäisches Patentamt

**(19)** European Patent Office

Office européen des brevets

**(11)** Publication number : **0 380 160 B1**

**(12)** # EUROPEAN PATENT SPECIFICATION

**(45)** Date of publication of patent specification :
**14.12.94 Bulletin 94/50**

**(51)** Int. Cl.$^5$ : **H04M 11/06, H04M 1/274**

**(21)** Application number : **90200117.1**

**(22)** Date of filing : **17.01.90**

**(54) Method of automatically selecting a data connection as well as a telephone set suitable for this method.**

**(30)** Priority : **23.01.89 NL 8900150**

**(43)** Date of publication of application :
**01.08.90 Bulletin 90/31**

**(45)** Publication of the grant of the patent :
**14.12.94 Bulletin 94/50**

**(84)** Designated Contracting States :
**DE FR GB IT SE**

**(56)** References cited :
DE-A- 3 325 676
DE-A- 3 336 838
GB-A- 2 172 473
US-A- 4 718 082

**(73)** Proprietor : **N.V. Philips' Gloeilampenfabrieken**
**Groenewoudseweg 1**
**NL-5621 BA Eindhoven (NL)**

**(72)** Inventor : **Hesdahl, Piet Bernard**
**c/o INT. OCTROOIBUREAU B.V., Prof. Holstlaan 6**
**NL-5656 AA Eindhoven (NL)**
Inventor : **Klik, Cornelis Machiel**
**c/o INT. OCTROOIBUREAU B.V., Prof. Holstlaan 6**
**NL-5656 AA Eindhoven (NL)**

**(74)** Representative : **De Jongh, Cornelis Dominicus et al**
**INTERNATIONAAL OCTROOIBUREAU B.V.,**
**Prof. Holstlaan 6**
**NL-5656 AA Eindhoven (NL)**

## Description

The invention relates to a method of automatically selecting a data connection. Such a method is widely known to be used in telecommunication networks arranged for data communication, more specifically, telephone networks. A so-called hotline connection is then referred to, which implies that the terminal, more specifically, the telephone set, in the data mode is always automatically connected to a specific further terminal. Such a hotline connection is used in the exchange of the telephone network, and a data connection to another terminal than the preselected one is impossible, unless a hotline connection is established with this terminal which, however, can only be effected by a person authorized for this purpose. The invention further relates to a telephone set comprising means for automatically selecting a data connection.

There are also terminals with which a data connection to an arbitrary further terminal can be established by dialling the number of the further terminal via the keyboard of the calling terminal, or by depressing on this keyboard a preselection key under which his dialling number is stored, whilst a plurality of such preselection keys may be provided. However, this will not be a matter of selecting a terminal automatically because one or more operations always have to be performed manually. Finally, synchronous data equipment, such as a personal computer, is known be used for transferring the dialling information to a terminal.

Standards for synchronous data communication are, for example, the CCITT protocols X.21 and V25bis, whereas equipment in which these standards are implemented is not widely used and its implementation in consumer equipment such as ISDN terminals is costly.

The German Patent Application 33 36 838 describes a device which automatically establishes a dataconnection in parallel to an already existing speech connection if the device is activated in the datamode. Thereto the dialling number of the telephone whereto there is a connection is read from a memory location, this number is modified into the dialling number of a data terminal belonging to said telephone and a dataconnection to that terminal is established.

The UK Patent Application 2 172 473 describes a facsimile apparatus comprising a telephone, with a memory to be programmed by a user which comprises pairs of dialling numbers of faxes and telephones of frequently contacted persons. When a user has a speech connection with a telephone, of which the dialling number is in the memory and sets the apparatus in the datamode, the other dialling number in the memory is automatically referred to. This number is then dialled and a dataconnetcion is established.

It is an object of the invention to provide a method enabling a terminal to establish a data connection to any further terminal, obviating the drawback of a hotline connection, whereas such a hotline connection remains possible basically, and without manual operations being necessary for establishing the data connection to this further terminal. It is further object of the invention to provide a telephone set which is suitable for implementing this method.

For this purpose a method according to the invention is characterized in that once a calling terminal has been activated in a datamode at least a single data dialling number is searched for at a specific memory location belonging to a specific preselection key of the terminal whereby if the data dialling number is found at the memory location the dataconnection is established with a terminal belonging to the dialling number and if no data dialling number is found at the memory location the dataconnection is established with a specific preset terminal.

The invention can specifically be used to advantage in synchronous data communication connections because there are not yet any widely used standard for them, whereas implementing the existing standards is costly. Basically, however, the invention can also be used for asynchronous data communication connections.

The invention is based on the recognition that telephone sets having a data communication mode nearly always comprise preselection keys under which dialling numbers for standard speech traffic can be stored at various levels or otherwise, so that one of these preselection keys, or a level beneath it, can be reserved for storing a dialling number which can be used for establishing a data connection, a data dialling number referred to hereinafter. In the data mode it is first detected whether a data dialling number has really been stored at that location and if this is not the case, a hotline connection preset in the exchange can be established automatically, if so desired, via the exchange. If two or more data dialling numbers can be stored, it is first verified in the data mode whether one of the data dialling numbers having a preset order is available. If a first data dialling number is found, a data connection is set up with the terminal belonging to this data dialling number. If no data dialling number is found, the hotline connection is set up automatically. The user can now optionally store a data dialling number of a terminal desired by the user himself, which terminal in the data communication mode will then automatically be selected, and modify this number accordingly, or, by not storing any data dialling number under the specific preselection key, be automatically switched to the fixed terminal via the hotline connection.

This specific preselection key, or the level reserved for a data dialling number underneath this key, can then be used for another purpose, such as storing a dialling number for a speech connection. A data dialling number can be distinguished from a dialling number for a speech connection because a data dialling number is extended by, for example, a specific data feature. The invention will now be further explained on the basis of an embodiment with reference to the drawing Figures in which:

Fig. 1: shows a flow chart of the method according to the invention, and

Fig. 2: shows a block diagram of a telephone set which is suitable for use according to the invention.

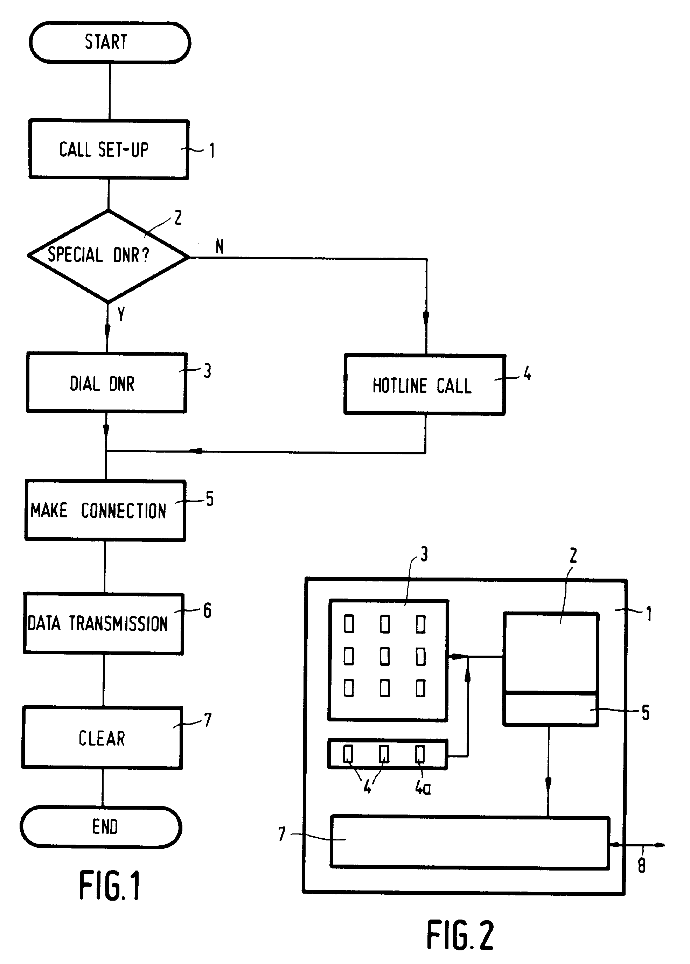

In the flow chart of Fig. 1 the boxes have the following description:

| Box number | Title | Description |
|---|---|---|
| 1 | CALL SET UP | the telephone set is activated in the data mode |
| 2 | SPECIAL DNR? | test whether a data dialling number is stored at a predetermined memory location |
| 3 | DIAL DNR | the specific data dialling number is selected |
| 4 | HOTLINE CALL | there is a hotline call |
| 5 | MAKE CONNECTION | the data connection is established |
| 6 | DATA TRANSMISSION | the data transmission is effected |
| 7 | CLEAR | the data connection is broken off. |

Fig. 2 shows a block diagram of a telephone set which can operate in accordance with the method according to the invention. The telephone set 1 comprises a dialling number memory 2, which may be addressed by means of the figure keyboard 3 of the telephone set, or by means of a preselection key 4 programmed for a specific dialling number. Associated to the dialling number memory 2 is a memory location 5 for the dialling number stored under the preselection key 4a, which preselection key is intended for a data dialling number which can be selected at will by the user and be programmed in the manner known to him, and if the user does not intend to utilize this facility, for an ordinary dialling number for a speech connection. If the user activates telephone set 1 in the data mode and prior to this stored a data dialling number under key 4a, this data dialling number will be transferred to a central controller 7. The central controller 7 provides the selection of the data dialling number stored in memory location 5 and, once the connection has been established, provides the data transfer to the selected terminal <u>via</u> a data line 8. If a terminal is activated in the data mode, for example, by lifting the receiver or depressing a key, or, fully automatically, by the data interface being activated, and if no data dialling number is stored at memory location 5, the central controller 7 will furnish a signal which, in the exchange of the telephone set, for example, a PABX system to which the telephone set 1 belongs, will provide the establishment of the hotline connection preset in this exchange.

Owing to the measures according to the invention it is thus possible in an extremely user-friendly fashion for a data connection to be established with a fixed, preset terminal or with a terminal preset by the user without various manual operations being required for this purpose each time.

## Claims

1. A method of automatically selecting a data connection characterized in that once a calling terminal has been activated in a datamode at least a single data dialling number is searched for at a specific memory location belonging to a specific preselection key of the terminal whereby if the data dialling number is found at the memory location the dataconnection is established with a terminal belonging to the dialling number and if no data dialling number is found at the memory location the dataconnection is established with a specific preset terminal.

2. A telephone set (1) comprising means for automatically selecting a data connection, characterised in that the means for automatically selecting a data connection comprises means to search for a data dialling number at a specific memory location (5) belonging to a specific preselection key (4a) once the telephone set has been activated in a data mode, the means for automatically selecting a data connection being arranged to set up an automatic data connection via a data line (8) with a terminal belonging to the data dialling number, when the data dialling number is present at the specific memory location (5), and being arranged to set up an automatic dataconnection via a data line (8) with a preset terminal, when no data dialling number is present at the specific memory location (5) .

**Patentansprüche**

1. Verfahren zur automatischen Wahl einer Datenverbindung, <u>dadurch gekennzeichnet</u>, daß sobald ein Anrufterminal im Datenmodus aktiviert worden ist, wenigstens eine einzige Datenrufnummer an einer bestimmten zu einer Voreinstellungstaste des Terminals gehörenden Speicherstelle gesucht wird, wobei die Datenverbindung mit einem zu der Rufnummer gehörenden Terminal hergestellt wird, wenn an der Speicherstelle eine Rufnummer gefunden wird, und wenn keine Datenrufnummer an der Speicherstelle gefunden wird, die Datenverbindung zu einem bestimmten voreingestellten Terminal hergestellt wird.

2. Fernsprechapparat (1) mit Mitteln zur automatischen Wahl einer Datenverbindung, <u>dadurch gekennzeichnet</u>, daß die Mittel zur automatischen Wahl einer Datenverbindung Mittel umfassen, um eine Datenrufnummer an einer bestimmten, zu einer bestimmten Voreinstellungstaste (4a) gehörenden Speicherstelle (5) zu suchen, sobald der Fernsprechapparat im Datenmodus aktiviert worden ist, die Mittel zur automatischen Auswahl eine Datenverbindung, die so eingerichtet sind, daß sie über eine Datenleitung (8) eine automatische Datenverbindung mit einem zur Datenrufnummer gehörenden Terminal aufbauen, wenn die Datenrufnummer sich an der bestimmten Speicherstelle (5) befindet, und die so eingerichtet sind, daß sie über eine Datenleitung (8) eine automatische Datenverbindung mit einem voreingestellten Terminal aufbauen, wenn sich keine Datenrufnummer an der bestimmten Speicherstelle (5) befindet.

**Revendications**

1. Procédé de sélection automatique d'une liaison de transmission de données, caractérisé en ce qu'une fois qu'un terminal appelant a été activé en mode de transmission de données, au moins un seul numéro d'appel de données est recherché à un emplacement de mémoire spécifique appartenant à une touche de présélection spécifique du terminal, sachant que, si le numéro d'appel de données est trouvé dans l'emplacement de mémoire, la liaison de transmission de données est établie avec un terminal appartenant au numéro d'appel et que, si aucun numéro d'appel de données n'est trouvé dans l'emplacement de mémoire, la liaison de transmission de données est établie avec un terminal prédéfini spécifique.

2. Appareil téléphonique (1) comprenant des moyens pour sélectionner automatiquement une liaison de transmission de données, caractérisé en ce que les moyens de sélection automatique d'une liaison de transmission de données comprennent des moyens pour rechercher un numéro d'appel de données à un emplacement de mémoire spécifique (5) appartenant à une touche de présélection spécifique (4a), une fois que l'appareil téléphonique a été activé en mode de données, les moyens de sélection automatique d'une liaison de transmission de données étant agencés pour établir une liaison de transmission de données automatique via une ligne de données (8) avec un terminal appartenant au numéro d'appel de données, lorsque le numéro d'appel de données est présent dans l'emplacement de mémoire spécifique (5), et étant agencés pour établir une liaison de transmission de données automatique via une ligne de données (8) avec un terminal prédéfini, lorsqu'aucun numéro d'appel de données n'est présent dans l'emplacement de mémoire spécifique (5).

FIG.1

FIG.2